# EUROPEAN PATENT APPLICATION

(11) **EP 2 105 896 A1**
(43) Date of publication of application: **30.09.2009**
(21) Application number: 09004013.0
(22) Date of filing: 20.03.2009
(51) Int. Cl.: G07F 17/12, G07F 17/26

(54) **Delivery system**

(30) Priority: 26.03.2008 JP 2008081490; 26.03.2008 JP 2008081491
(71) Applicant: NORITSU KOKI CO., LTD., Wakayama-shi, Wakayama (JP)
(72) Inventor: Tsuji, Yuki, Wakayama-shi Wakayama (JP); Matsushita, Masayuki, Wakayama-shi Wakayama (JP); Yukawa, Masaaki, Wakayama-shi Wakayama (JP)
(74) Representative: Lemcke, Brommer & Partner

(57) **Abstract**

A delivery system includes a plurality of delivering devices (E), each of which includes a storage unit (46) having a plurality of storage spaces (S) for storing therein recording media (P) according to the unit of customer's order and a delivering controlling unit (48) operable to obtain ID information associated with the recording medium (P), thereby realizing delivery of the recording medium associated with the ID information, and a guiding device (F) including an ID information obtaining section (52, 54) for obtaining the ID information from a customer, an information outputting section (53, 55) for outputting information and a guiding controlling unit (56) for controlling the information obtaining section (52, 54) and the information outputting section (63, 55). The guiding controlling unit (56) includes an information sharing device (57) for referring to the recording media (P) stored in the plurality of storage units (46) of the delivering device (E) and to ID information associated with the recording media (P) via a communicating means (L). When the ID information obtaining section (52, 54) has obtained the ID information, the guiding controlling unit (56) outputs, to the information outputting section (53, 55), specifying information for specifying one of the delivering devices (E) which stores the recording medium (P) associated with the ID information, based upon information from the information sharing means (57).

## Description

### BACKGROUND OF THE INVENTION

### FIELD OF THE INVENTION

The present invention relates to a delivery system including a delivering device, the delivering device having a storage unit with a plurality of storage spaces for storing therein recording media according to the unit of customer's order and a delivering controlling unit operable to obtain ID information associated with the recording medium, thereby realizing delivery of the recording medium associated with the ID information. The invention relates more particularly to a delivery system for delivering such recording medium as an image-printed print paper to a customer.

### DESCRIPTION OF THE RALATED ART

Constructions relating to the delivery system having the above-described construction are known from e.g. Japanese Patent Application "Kokai" No. 9-15827 and Japanese Patent Application "Kokai" No. 2003-157474. The Japanese Patent Application "Kokai" No. 9-15827 discloses an automated photographic laboratory processing system which includes a processor section for effecting printing process from a photographic film to a print paper, a shipping section for packing DPE products in a bag and returning them to a customer, and a central control section for effecting centralized control of the DPE products based on ID attached to a photographic film.

According to this construction of Japanese Patent Application "Kokai" No. 9-15827, when the system receives an order for printing from a negative film and receiving monetary charge payment therefor, the system will prepare a card that records, in its data recording area 46, the ID together with other information such as the date of order receipt and the expected date of delivery and give this card to the customer. After this order reception, printing exposure from the negative film to the print paper and then development of the printed paper are carried out. Thereafter, the negative film sheet and the prints will be packed together in a bag and dropped from a hopper section onto a table provided in a conveyer type stock section.

Also, a shipping unit controller correlates an address provided to this table with the ID provided to the bag. The conveyor type stock section includes a plurality of such tables, each of which is configured rotatable about a right/left axis. In operation, as the table is rotated about this axis, the DP bag placed thereon can be slid down to be fed. Next, when the customer inserts the card to the system and requests return, based on the ID provided in the card, the shipping controller unit searches the address from the ID and brings a table corresponding to the address into registry with a return opening and then rotates the table about the axis for slidably guiding and dropping the DP bag thereon, so that the bag can be taken out from the return opening.

In the case of the Japanese Patent Application No. 2003-157474, there is provided an automated print receiving/delivering apparatus including an automated receiving section and an automated delivering section, the apparatus being installed to e.g. an outer wall face of a shop. In operation, a customer inputs information of the order and information for identifying this customer per se and charges a film or a recording medium used in a digital camera or the like to a film receiving section. Then, the system prints out an order card in the form of a magnetic card printed with the order information, etc.

Next, printing operation from the film will be effected in e.g. a DPE shop and printed product (corresponding to a "recording medium" of the invention) will be put in a storage bag (corresponding to a "package" of the invention) and stored under this condition in a storage room. This storage room has a door which can be locked. Then, when the customer is to receive the printed product, he/she will insert the order cad into an order information confirming section and pay an amount of charge shown on a monitor to a charge receiving section. In response to this, the display will show a number of storage chamber corresponding to the order and the door of the storage chamber will be unlocked. So that, the customer can now open the door and take out the printed product.

In the case of small-sized DPE shops, the above techniques disclosed in the Japanese Patent Application "Kokai" No. 9-15827 and the Japanese Patent Application "Kokai" No. 2003-157474 will be useful for efficient operation with such limited number of shop attendants, since the techniques allow the process of delivering prints to the customer who ordered them to proceed in an unmanned manner, i.e. without any intervention by any shop attendant.

And, if a great amount or number of printed products are to be delivered to customers, it will be effective to install a plurality of the apparatuses (delivering apparatuses) disclosed in the Japanese Patent Application "Kokai" No. 9-15827 or the Japanese Patent Application "Kokai" No. 2003-157474. Further, in case a plurality of delivering devices are employed, it may be desired to limit the kind of recording medium to be stored in each delivering device in order to achieve efficient storage. More particularly, when it is desired to store a relative small sized printed product commonly referred to as "service size" and a larger-sized printed product in a same device, it becomes needed to adapt the storing space to the larger-sized printed product, thus requiring enlargement of the storing space. This results in enlargement of the entire device and reduction in the storage capacity or storable number of products.

In view of the above, it is presently conceived to provide a delivering device adapted for storing the relatively small-sized printed products and a delivering device adapted for storing the larger-sized printed products, separately.

However, in case a plurality of delivering devices for delivering printed product to customers are provided, when a customer receives a printed product, the customer may not be able to judge from which delivering device the product can be received.

As such, there is a need for constructing an improved system in a rational manner which system allows easy judgment from which delivering device the target recording medium can be received.

### SUMMRY OF THE INVENTION

According to a characterizing feature of the present invention, in a delivery system with a delivering device including a storage unit having a plurality of storage spaces for storing therein recording media according to the unit of customer's order and a delivering controlling unit operable to obtain ID information associated with the recording medium, thereby realizing delivery of the recording medium associated with the ID information and with a guiding device including an ID information obtaining section for obtaining the ID information from a customer, an information outputting section for outputting information and a guiding controlling unit for controlling said information obtaining section and said information outputting section;
wherein the system comprises a plurality of said delivering devices;
said guiding controlling unit includes information sharing means for referring to the recording media stored in the plurality of storage units of the plurality of delivering device and to ID information associated with the recording media via a communicating means; and
wherein when said ID information obtaining section has obtained the ID information, said guiding controlling unit outputs, to said information outputting section, specifying information for specifying one of the delivering devices which stores the recording medium associated with said ID information, based upon information from said information sharing means.

With the above-described construction, when a customer is to receive a recording medium stored in a delivering device, the customer causes the ID information obtaining section of the guiding device to obtain its ID information. With this, based upon information from the information sharing means, the guiding controlling unit outputs, to the information outputting section, specifying information for specifying one of the delivering devices which stores the recording medium associated with said ID information. Then, based on this information, the customer can easily understand from which delivering device the reception of the recording medium is possible. Hence, there has been achieved an improved rational system which allows a customer to easily realize from which delivering device the reception of the recording medium is possible even when a plurality of delivering devices are installed, thus allowing reception of recording medium without waste of time.

According to a further characterizing feature of the present invention, said delivering device includes a case having the storage unit therein and a feeding unit for feeding the recording medium stored in the storage unit to the outside of the case, and said delivering controlling unit determines the storing space where the recording medium associated with the ID information is stored and controls said feeding unit to feed the recording medium from the storing space.

With this construction, only by the customer's inputting the ID information to the ID information obtaining section, the recording medium associated with this ID information will be fed from the storage unit in the case, so that the customer can receive this recording medium.

According to a still further characterizing feature of the present invention, the system further comprises a receiving device for receiving, from a customer, an order for image processing on the recording medium, and a receiving controlling unit for producing a reception slip recording the ID information in correspondence with the order, when the receiving device receives the order for image processing on the recording medium. With this construction, when a customer has placed an order for image processing at the receiving device, the receiving device produces a reception slip, so the customer can later obtain the recording medium from the delivering device with this reception slip.

According to a still further characterizing feature of the present invention, the system further comprises a receiving server for receiving a request for image data processing on the recording medium via a communication network, wherein when the receiving server has received a request or order for image data processing, there is produced the ID information containing character information or numerical information in correspondence with the order and this information is transmitted to the customer via the communication network. With this construction, if the receiving server has received a request or order for image data processing, there is produced the ID information containing character information or numerical information in correspondence with the order and this information is transmitted to the customer via the communication network, so that the customer can receive the printed medium from the delivering device with the ID information.

According to a still further characterizing feature of the present invention, the system further comprises a printing unit for printing image information on the recording medium and an automatic charging unit for charging the recording medium printed at the printing unit to the storage unit. With this construction, it is possible to eliminate the need for e.g. a DPE shop attendant to store the recording medium at a storing space in the storage unit.

According to a characterizing feature of the present invention, in a delivery system with a delivering device including a storage unit having a plurality of storing spaces for storing recording media according to customer's order unit, and a delivering controlling unit for obtaining ID information associated with the recording medium, thus realizing delivery of the recording medium associated with the ID information, the system comprises a plurality of said delivering devices, each of which includes an ID information obtaining section for obtaining the ID information from a customer, and an information outputting section for outputting information;
wherein said delivering controlling unit includes information sharing means for referring to the recording media stored in the plurality of storage units of the plurality of delivering device and to ID information associated with the recording media; and
wherein when said ID information obtaining section of one of the delivering devices has obtained the ID information, said delivering controlling unit allows delivery of the recording medium if the recording medium associated with the ID information is stored in the storage unit of said one delivering device, whereas said delivering controlling unit determines presence/absence of a delivering device that stores the recording medium associated with the ID information if the recording medium associated with the ID information is not stored in the storage unit of said one delivering device and then outputs result of this determination to the information outputting section of said delivering device.

With the above-described construction, when the customer is to receive the recording medium stored in the delivering device, the customer causes the ID information obtaining section of one of the plurality of delivering devices to input the ID information. With this, based upon information from the information sharing means, the delivering controlling unit determines presence/absence of a delivering device storing the recording medium associated with the ID information and outputs the result of this determination to the information outputting section. Hence, based on this output, the customer can receive the recording medium from the delivering device, without any confusion. Therefore, even if a plurality of delivering devices are installed, a customer can readily find from which delivering device the reception of the recording medium is possible. Hence, there has been achieved an improved rational system which allows reception of recording medium without waste of time.

According to a still further characterizing feature of the present invention, when said delivering controlling unit determines that the recording medium associated with the ID information inputted by said ID information obtaining means is stored in a storage unit of a further delivering device than said one delivering device, said delivering controlling unit outputs, to said information outputting section, specifying information specifying said further delivering device storing the recording medium. With this construction, if the delivering device which has inputted the ID information does not store the recording medium associated with the ID information, based upon information outputted to the information outputting section, the customer can receive the recording medium from the specified delivering device.

Further and other features and advantages of the present invention will become apparent upon reading the detailed disclosure of some presently preferred embodiments thereof with reference to the accompanying drawings.

### BFIEF DESCRIPTION OF THE DRAWINGS

[Fig. 1] a perspective view showing an entire construction of a delivery system according to a first embodiment,
[Fig. 2] a perspective view of a receiving device,
[Fig. 3] a perspective view of a guiding device,
[Fig. 4] a vertical section showing an inkjet printer, an enveloper and a delivering device,
[Fig. 5] a perspective view showing the general construction of the delivering device,
[Fig. 6] a view showing an upper portion of the front face of the delivering device in the first embodiment,
[Fig. 7] a block circuit diagram showing the controlling construction of the delivery system according to the first embodiment,
[Fig. 8] a diagram showing flows of information in the controlling construction in the first embodiment,
[Fig. 9] a flowchart showing the sequence of a delivery process in the first embodiment,
[Fig. 10] a diagram showing the construction of a modified embodiment (a),
[Fig. 11] a perspective view showing the general construction of a delivering system according to a second embodiment,
[Fig. 12] a view showing an upper portion of the front face of the delivering device in the second embodiment,
[Fig. 13] a block circuit diagram showing the control construction of the delivery system according to the second embodiment,
[Fig. 14] a diagram showing flows of information in the controlling construction in the second embodiment, and
[Fig. 15] a flowchart showing the sequence of a delivery process in the second embodiment.

### DETAILED DESCRIPTION OF THE PREFERRED EMBODIMENTS

### [First Embodiment]

Next, a first embodiment of the present invention will be described with reference to the accompanying drawings.

### [General Construction]

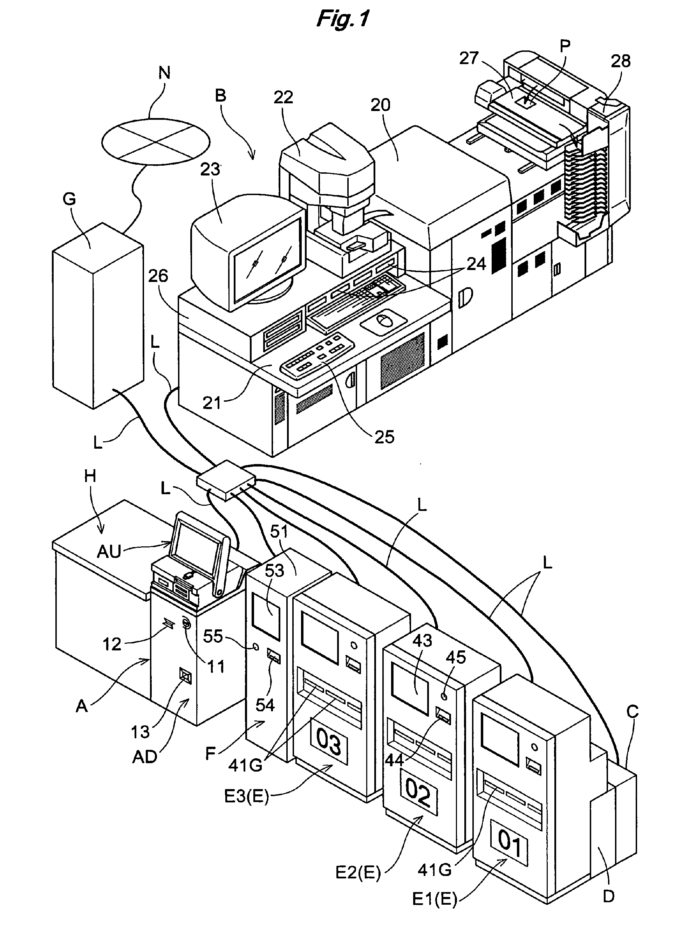

As shown in Fig. 1, a delivery system comprises a receiving device A, a silver halide photographic printer B for printing image data on a recording medium P which is a silver halide print paper, based on information from the receiving device A, three delivering devices E, a guiding device F, and a receiving server G to be connected to the internet N as a communication network.

The delivering devices E comprises a first delivering device E1, a second delivering device E2 and a third delivering device E3. These three delivering devices E respectively store a recording medium P which corresponds to the size or the type (such as glazed paper, semi-glazed paper) of recording medium to be used in the printing. Further, on the front face of each one of the three delivering devices E, there is displayed a numeral for specifying each device E.

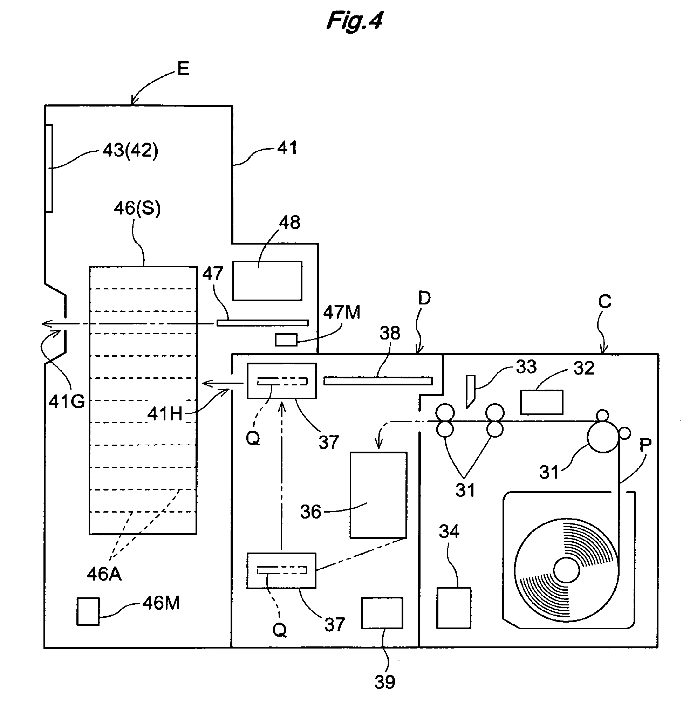

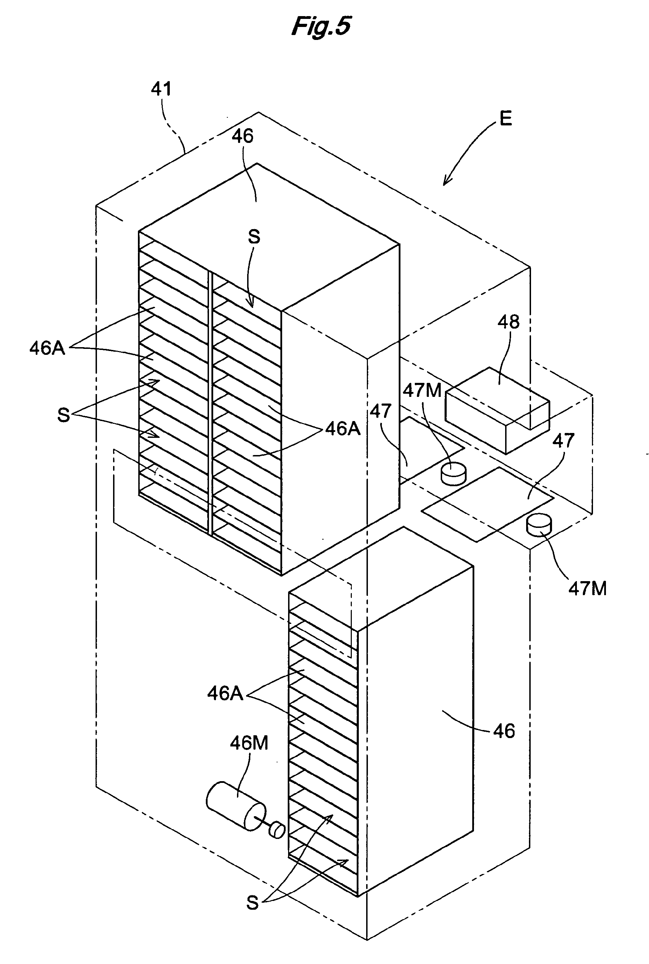

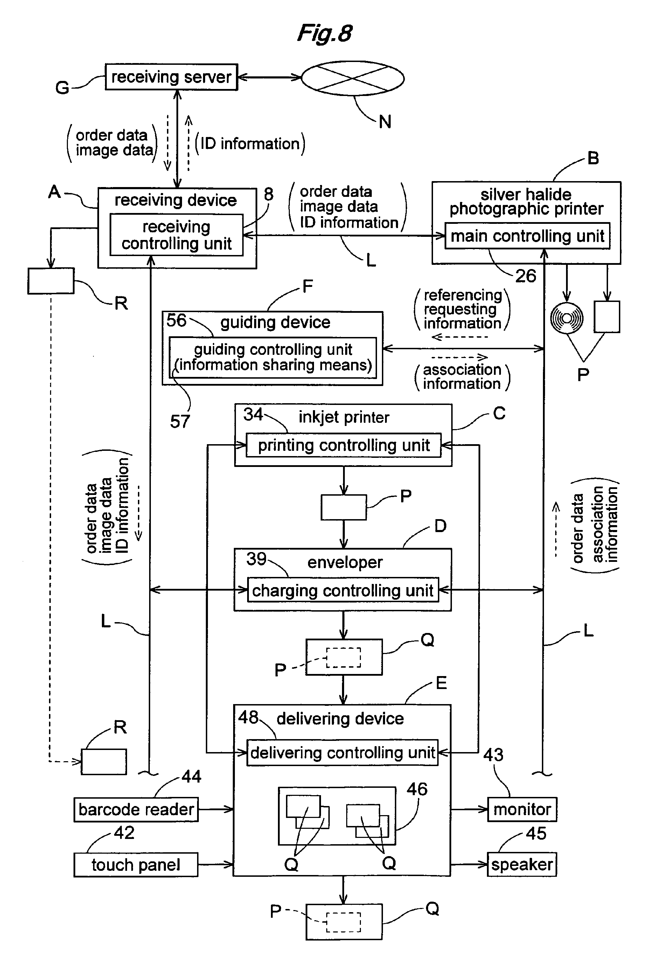

In particular, a recording medium P printed by the silver halide photographic printer B is manually charged into a processing bag Q (see Fig. 8). After this charging, this processing bag Q is manually stored in a storage unit 46 (see Fig. 4 and Fig. 5) of the third delivering device E3. In this manner, the third delivering device E3 is to store recording media P which cannot be automatically printed or which are less frequently printed, such as a postcard, a greeting card, etc.

The first delivering device E1 and the second delivering device E2 each includes an inkjet printer C for printing image data on a recording medium P comprised of a print paper and an enveloper D for charging the printed recording medium P into the processing bag Q. This enveloper D automatically charges a recording medium P as contained in the processing bag Q to a storage unit 46 of the corresponding delivering device E. These two kinds of delivering devices E are installed for storing recording media of different sizes/or types and are used for storing prints of frequently printed type, commonly known as the "service size" prints.

This delivery system is assumed to be installed in a relatively large-scaled DPE photo service shop or a large-scaled electric appliance shop, etc. In such DPE shop or the like, the system is provided with a counter table H which allows receiving of a photographic film and receiving and processing of a customer's order associated therewith.

This delivery system realizes control operations for delivering finished recording medium P to a customer e.g. after the DPE shop is closed or in a situation without any shop attendant. To realize such control operations, the delivering device E will be installed at such a position as an outer wall surface of the shop or a position facing a corridor. Further, this delivery system is configured to automatically effect the operation of printing image on a recording medium P of a predetermined size, the operation of charging the processed recording medium P into a processing bag Q and the operation of charging the processing bag Q containing the recording medium P to the delivering device E. With this, the present delivery system realizes reduction in the amount of work of the DPE shop attendant.

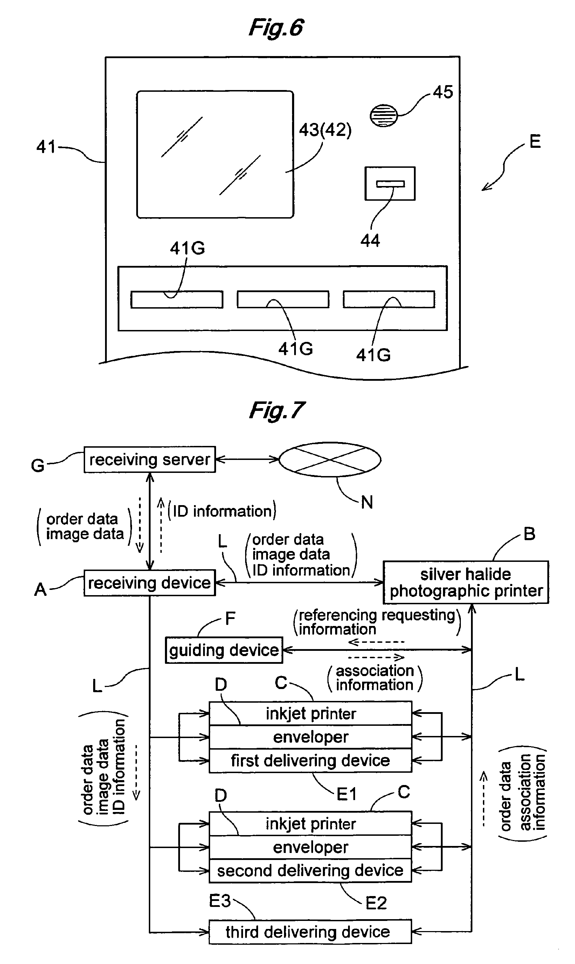

As shown in Fig. 1 and Fig. 7, these devices, namely, the receiving device A, the silver halide photographic printer B, the inkjet printer C, the enveloper D, the delivering devices E and the guiding device F are connected via a communication cable L (an example of "communicating means") to allow information access relative to each other. Incidentally, the communication cable L is assumed to be one effecting communication by a wired LAN technique. However, this cable may use any other technique such as intranet technique, wireless communication technique, etc.

### [Brief Overview of Processing]

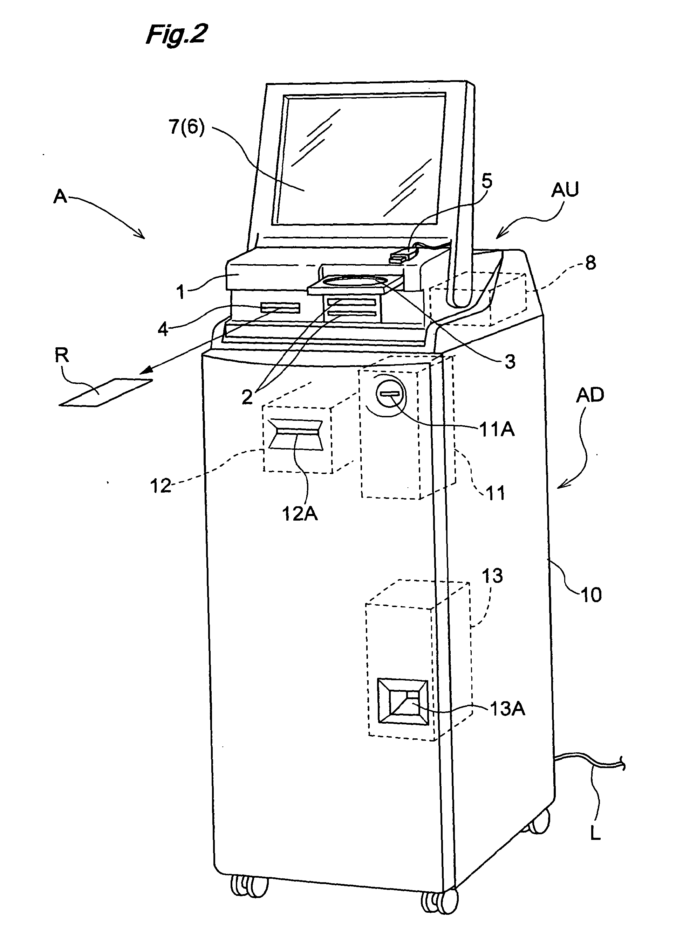

When the receiving device A has received an order for printing processing from a customer, this receiving device A obtains image data, receives payment for a charge corresponding to the order and prints out a receipt slip R (see Fig. 2) on which ID information, etc. are printed. Similarly, in case a customer has logged-in to the receiving server G via the internet N and the system has received an order for printing processing from this customer, the receiving server G obtains image data and generate ID information comprised of a personal ID number, a password or the like containing character or numeric information and transmits this to the customer via the internet N. In this case of reception via the internet N, the charge for the order will be transmitted to the customer via the internet N and the customer will make the payment via the internet, separately.

If the print size specified by the order received at the receiving device A is a relatively small size referred to as "service size", then, the image data received by the receiving device A is transmitted to the inkjet printer C and printed on the recording media P which are print papers. The printed recording .media P are put into the processing bag Q at the enveloper D and the enveloper D charges this processing bag Q into a storage unit 46 of the delivering device E (the first delivering device E1 or the second delivering device E2).

Or, if the print size specified by the order received at the receiving device A differs from the predetermined service size or is a size which is not frequently printed or the image date is to be recorded in a recording medium P comprised of a CD-R to be made into an electronic photo album, the image data received at the receiving device A is transmitted to the silver halide photographic printer B. The transmitted image data will then be printed on silver halide type recording media P by an operator or recorded in a CD-R to be manually put into the processing bag Q according to the customer's order. The recording media P comprised of printed image data or recording medium P comprised of a CD-R recording the image data therein will be manually charged to the third delivering device E3 by a DPE shop attendant.

After the storage of the processing bag Q at the delivering device E, if the customer is to receive the recording medium P, the customer causes a barcode reader 44 provided in the delivering device E to read the ID information in the receipt slip R. With this, the processing bag Q containing the recording medium P associated with the ID information will be automatically fed from the delivering device E, so that the customer can receive the processing bag Q thus fed.

Incidentally, if an order received at the receiving device A from a customer contains the service size and a non-service size(s) in a mixed state, then, the recording media P will be stored at two delivering devices separately, so two delivering processes will be carried out simultaneously and the customer will receive the recording media P from two delivering devices E.

Especially, in a shop with a plurality of delivering devices E installed, it often happens that the customer cannot see which delivering device E stores the ordered recording medium P. In order to solve this inconvenience, when the customer causes the guiding device F to read the ID information in the receipt slip R or inputs a personal ID number to this guiding device F, the guiding device F outputs information which specifies the delivering device E. With this, the customer can receive the recording medium P from the delivering device E storing this ordered recording medium P, without any error.

### [Receiving Device]

As shown in Fig. 2, the receiving device A consists of an upper receiving terminal AU and a lower charge receiving terminal AD. The receiving terminal AU includes, in a front face of a main body 1 thereof, a plurality of kinds of semiconductor drives 2 for obtaining photographic data from various semiconductor type memories (not shown) such as a "compact flash" (trademark) card, an SD card (trademark), a memory stick (trademark), a disc drive 3 for obtaining photographic data from various kinds of disc type media (not shown) such as a floppy disc (trademark), an MO, a CD-R, a receipt slip printer 4 for printing and discharging the receipt slip R and includes, in the upper face of the main body 1, a connector 5 to be connected to a mobile phone with a camera for obtaining photographic data therefrom, and a liquid-crystal type monitor 7 forming a touch panel 6 on its displaying face for displaying necessary data. Further, the receiving device A includes, inside its main body 1, a receiving controlling unit 8 for processing received information and transmitting the processed information via a communication cable.

The charge receiving terminal AD incorporates therein a coin receiving unit 11 for receiving a coin(s) from a coin inserting slot 11A provided at an upper position of a vertically elongated case 10 and a bill receiving unit 12 for receiving a bill(s) from a bill inserting slot 12A. At a lower position of the case 10, there is provided a small change discharging unit 13 for discharging small change(s) from a small change discharging outlet 13A.

With this receiving device A, in the receiving terminal AU, under a condition of a customer setting a medium to the semiconductor drive 2 or the disc drive 3 or the customer connecting a mobile phone to the connector 5, the customer touches his/her finger on the touch panel 6 in accordance with guidance displayed on the monitor 7, so that the receiving device A obtains the image data from the medium or the mobile phone and obtains also order data for e.g. a print processing.

With this system, the sequence of the receiving process is configured such that after obtaining an order, the order is completed upon the customer's payment of a charge required for the processing at the charge receiving terminal AD. In case the order has been obtained via the internet, the charge will be received separately.

### [Silver Halide Photographic Printer]

The silver halide photographic printer B, as shown in Fig. 1, includes a housing 20 having a dark box construction. On the top surface of a console 21 provided at an end of this housing 20, there are mounted such devices as a film scanner 22, a monitor 23 for displaying information, a disc drive 24, a keyboard 25, etc. And, there is also provided a main controlling unit 26 for effecting process required for printing.

Further, the housing 20 accommodates therein, though not shown, an exposing section for effecting exposure on a recording medium P comprised of a print paper, a developing section for effecting development of the exposed recording medium, and a drying section for effecting drying of the developed recording medium. Outside the housing 20, there are provided a conveying belt 27 which receives the recording medium P after its drying, and a sorter 28 for sorting recording media conveyed from the conveying belt 27 according to the unit of each customer's order.

This sliver halide photographic printer B effects a printing operation by an operator or production of an electronic album using e.g. CD-R, based on the image data and the order data transmitted from the receiving device A.

### [Inkjet Printer]

As shown in Fig. 4, in the inkjet printer C, there is formed a conveying passageway along which a plurality of clamping rollers 31 are arranged for conveying the recording medium P comprised of en elongate recording paper wound in the form of a roll. A print head 32 is provided for discharging ink onto the recording medium P conveyed along this conveying passageway along a sub scanning direction while the head 32 is moving back and forth along a main scanning direction normal to the sub scanning direction. A cutter 33 is provided for cutting the recording medium P printed with the image data by the print head 23 into a print size(s). And, a printing controlling unit 34 is provided for controlling these components of the printer.

With this inkjet printer C in operation, based upon the image data and the order data transmitted from the receiving device A, the printing controlling unit 34 controls the clamping rollers 31, the print head 32 and the cutter 33, thereby to realize the printing processing of the image data on the recording medium P made of a print paper. In succession thereto, the recording medium A printed with the image data will be fed to the enveloper D which is described next.

### [Enveloper]

As shown in Fig. 4, the enveloper D includes a charging section 36 which operates to stack a plurality of recording media P printed at the inkjet printer C for their temporary stacked storage and charges the stored recording media P into the processing bags Q according to the unit of the customer's orders, a shift mechanism 37 which mounts thereon and elevates the processing bag Q charged with the recording medium P at the charging section 36 and then moving it horizontally to set it at an inserting position, a pusher 38 which pushes the processing bag Q mounted on the shift mechanism 37 at the inserting position into the delivering device E, and a charging controlling unit 39 for controlling these components. Incidentally, the shift mechanism 37 and the pusher 38 together constitute an "automated charging unit" used in the present invention.

In this enveloper D, the charging controlling unit 39 executes a series of control operations in which the recording media P fed therein one after another from the inkjet printer C are inserted into the processing bags Q of sizes predetermined according to the customer's order units and closing the bags for packaging the recording media and these bags are then inserted to respective storage spaces of the delivering device E which will be described later.

In the instant embodiment, the enveloper D is configured to charge the recording medium P into the processing bag Q. Alternatively, the developer D can be configured also to effect, as packaging operations, charging of the recording medium into a box-like container or wrapping the recording medium P with resin sheet for its packaging.

### [Delivering Device]

As shown in Fig. 4 trough 6, the delivering device E includes a monitor 43 having a casing 41 with a touch panel 42 formed on its displaying front face thereof, a barcode reader 44 (an example of "ID information obtaining section") for reading ID information from the receipt slip R, and a speaker 45. At the center of the casing 41, there are formed three openings 41G for allowing a customer to take out the recording medium P charged in the processing bag Q. In the rear face of the casing 41, there is formed an inlet opening 41H for receiving the processing bag Q sent from the enveloper D.

Inside this casing 41, there are mounted two storage units 46 which are movable up/down, and an electrically driven type elevating motor 46M for lifting up/down the respective storage units 46. In the rear section of this casing 41, there are provided three feeding plates 47 (an example of "feeding unit") for feeding the processing bags Q stored in the storing spaces S of the storage units 46 through an opening 41G, and an electrically driven motor 47M for projecting/retracting these three feeding plates 47. Also inside this casing 41, there is provided a delivering controlling unit 48 for controlling these components.

Each storage unit 46 is constructed as a rack including a plurality of supporting plates 46A for partitioning the inner space of the storage unit into a plurality of storing spaces S (storing compartments). Further, the two storage units 46 are disposed side by side on the right and left, with one having two columns of support plates 46A, the other having one column of support plates 46A, respectively.

These two storage units 46, as receiving drive force from the elevating motor 46M via a chain, are lifted up/down along guide rails (not shown). Further, a driving arrangement is provided in this lifting up/down such that the storage units 46 are lifted in opposite directions from each other so as to achieve good weight balance therebetween.

As the lifted position of the storage unit 46 is obtained by means of a sensor (not shown), it is made possible to obtain the positional relationship between each storing space S and the opening 41G as well as the positional relationship between each storing space S and the inlet opening 41H. Further, the position of the recording medium P (the position of the processing bag Q) stored in the storing space S is managed by the delivering controlling unit 48.

With the above-described construction in operation, when a recording medium P charged in a processing bag Q is to be received from the enveloper D, the delivering controlling unit 48 lifts up/down the storage unit 46 so as to move an empty storage space S not storing any processing bag Q therein to the position of the inlet opening 41H. Similarly, when a recording medium P charged in a processing bag Q is to be fed from the delivering device E, the storing unit 46 is lifted up/down to be moved the storing space S storing therein the processing bag Q to be fed to the position of the opening 41G.

And, when a customer is to receive the recording medium P, the barcode reader 44 of the delivering device E reads the ID information on the reception slip R. Then, the delivering controlling unit 48 will identify and specify the storing space S which stores the particular recording medium P associated with the ID information and will then lift up/down the storage unit 46 of a delivering device corresponding to this specified storing space S and operate the feeding plate 47 to feed the recording medium P charged in the processing bag Q from the opening 41G. With this, the customer can receive the recording medium P charged in the processing bag Q.

### [Guiding Device]

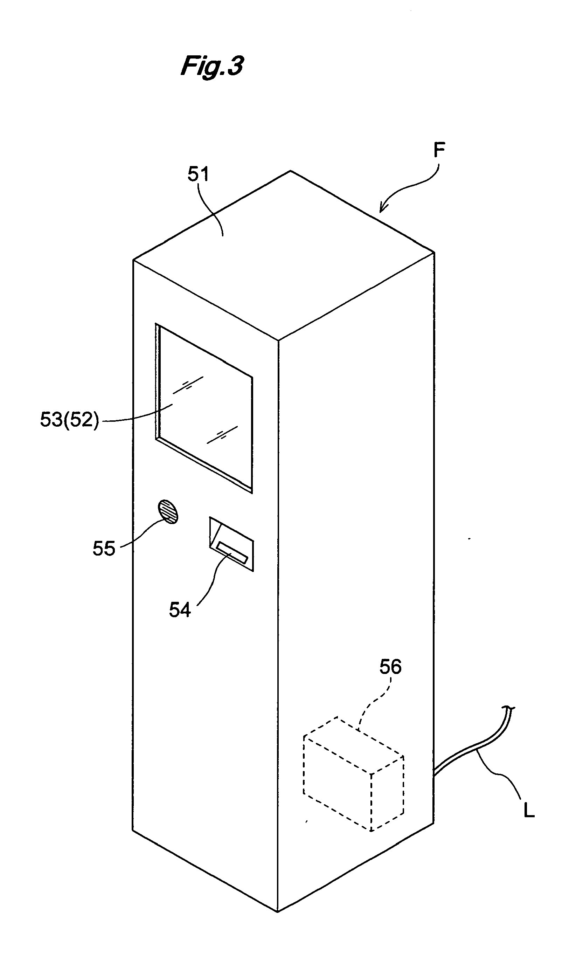

The guiding device F, as shown in Fig. 3 and Fig. 8, includes a monitor 53 (an example of "information outputting section") having a touch panel 52 (an example of "ID information obtaining section") provided on a front face of a box-like case 51, a barcode reader 54 (another example of the "ID information obtaining section") for reading the ID information from the reception slip R and a speaker 55 (another example of the "information outputting section"). Inside the case 51, there is provided a guiding controlling unit 56 for obtaining information from the touch panel 52 and the barcode reader 54 and outputting information to the monitor 53 and the speaker 55.

The guiding controlling unit 56 includes an information sharing means 57 which refers, via a communication cable L (an example of "communicating means") to association information indicative of the recording medium P stored in the storage unit 46 of the delivering device E and the ID information associated therewith.

And, when the ID information has been inputted by the barcode reader 54, or a personal ID number has been inputted via the touch panel 52 of the monitor 53, the guiding device F specifies or identifies the delivering device E storing the recording medium associated with that ID information or the personal ID number and displays this specifying information on the monitor 53 and outputs it from the speaker 55.

This specifying information is comprised of a numeral shown on the front face of the delivering device E. Alternatively, each delivering device E may be painted with a different design or color and the guiding device F may show the same painted design or color on the monitor 53.

### [Controlling Construction of the System]

As shown in Fig. 7 and Fig. 8, there is provided a signal line for transmitting information from the receiving controlling unit 8 of the receiving device A to the main controlling unit 26 of the silver halide photographic printer B via a communication cable L. Further, there is provided a signal line for transmitting information from the receiving controlling unit 8 to the printing controlling unit 34 of the inkjet printer C, the charging controlling unit 39 of the enveloper D, and to the delivering controlling unit 48 of the receiving device A via the communication cable L. To this communication cable L, there is also connected the guiding controlling unit 56 of the guiding device A and the receiving server G and the receiving controlling unit 8 of the receiving device are connected to each other via the communication cable L.

The main controlling unit 26 functions to manage the entire delivery system of the present invention. A signal line is provided to allow access of information to this main controlling unit 26, from the guiding controlling unit 56 of the guiding device F, the printing controlling unit 34, the charging controlling unit 39 and the delivering controlling unit 48.

The receiving controlling unit 8, the main controlling unit 26, the printing controlling unit 34, the charging controlling unit 39, the delivering controlling unit 48 and the guiding controlling units 56 respectively include a microprocessor and software for realizing the process corresponding thereto.

### [Procedure of Delivering Operation]

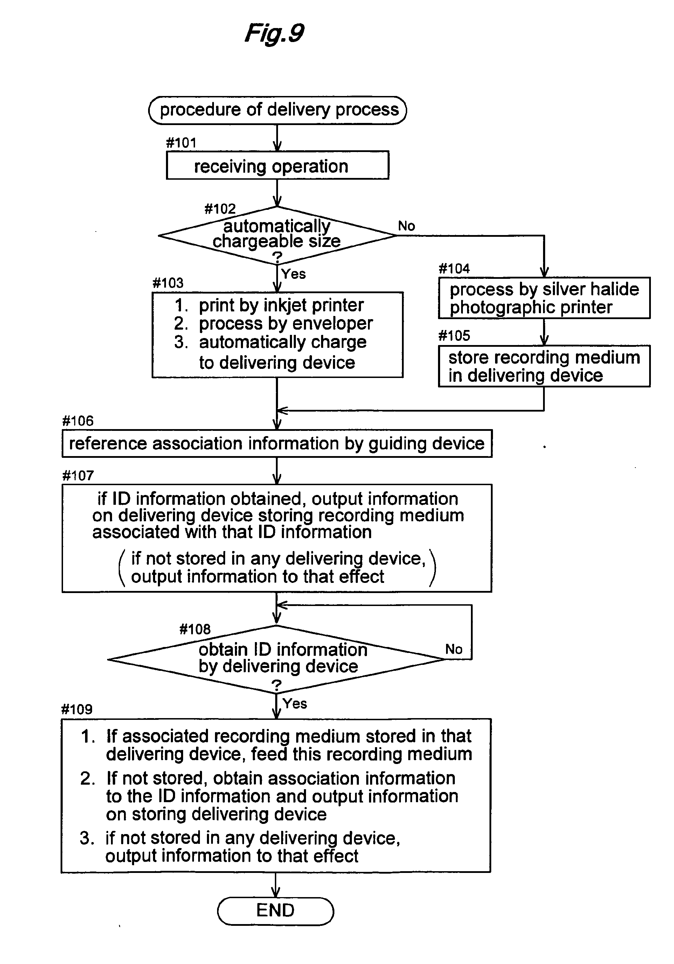

Fig. 9 shows a flowchart which illustrates the general flow of the procedure comprising making of recording medium P and delivery of this recording medium P to a customer, with use of the system construction shown in Fig. 7 and Fig. 8.

That is to say, the reception process is executed by a customer's setting of a medium recording image data therein to the receiving terminal AU of the receiving device A and then placing an order thereto (step #101).

More particularly, when the customer initiates the ordering process by touching, with e.g. his/her finger, an icon(s) displayed on the monitor 7 at the receiving device A, the receiving controlling unit 8 provides an order number and obtains order data relating to the required print size, the required number of prints, etc. for the printing processing.

Next, upon the above-described order setting, the receiving controlling unit 8 causes the monitor 7 to display the charge for the requested processing. In response, the customer will make the payment for the charge by putting a bill(s) and/or a coin(s) to the coin inserting slot 11A and/or the bill inserting slot 12A.. Then, the receiving unit 8 obtains the image data to be processed and a receipt slip R will be printed by the receipt slit printer 4. Specifically, in this receipt slip R, there are printed the order number for specifying/identifying the order, received monetary payment, the date of order reception, expected due date of delivery of requested product, the contents of the order, the receipt slip and the barcode.

As the above reception process, it is also possible for the customer to connect to the receiving server G via the internet N and to place an order with specifying the image information. If the order has been placed in this manner, information comprising the personal ID number as the ID information including character or numeric information, the order number, the expected due date of delivery, the contents of the order, and the order date will be transmitted to the customer via the internet.

Then, if the receiving controlling unit 8 determines based on the order data obtained as above that the requested print size(s) is (are) size(s) which can be automatically loaded from the enveloper D to the delivering device E, then, based upon the order data, the first delivering device E1 or the second delivering device E2 will be selected as a storage destination based upon the print size(s) and the type of recording paper.

Then, a printing processing based on the order data is effected at the inkjet printer C connected to the selected delivering device E. Subsequent to this printing processing, the enveloper D will charge the printed recording medium P into a processing bag Q according to the customer's order unit and also charges this processing bag Q to that delivering device E (step #102, step #103).

Especially, at step #102, if it is found that the size of one print size included in the plurality of prints in the order is a size which allows automatic charging from the enveloper D to the delivering device E and the other print size in the order is a size which does not allow the automatic charging from the enveloper D to the delivering device E (including the case where an electric photo album is to be made in a recording medium P comprising a CD-R disc), the receiving controlling unit 8 will transmit the image data and the order data to both the inkjet printer C and the silver halide photographic printer B.

In the course of the above-described series of processing, in the inkjet printer C, the printing controlling unit 34 receives the image data and the order data from the receiving controlling unit 8. Further, this printing controlling unit 34 controls the respective components of the inkjet printer C based on the order data, thereby to print the image data on the recording media P formed of print papers.

Further, in the enveloper D, the charging controlling unit 39 determines the number of prints included in the order by receiving the information from the printing controlling unit 34 and effects an operation of charging the number of prints of the recording media P corresponding to that order into a processing bag Q. When the processing bag Q is to be charged to the delivering device E, the charging controlling unit 39 obtains the position information of the storing space S from the delivering controlling unit 48 and moves the shift mechanism 37 to an inlet opening 41H corresponding thereto.

In operative association with the above, the delivering controlling unit 48 of the delivering device E controls the elevating motor 46M to move the processing bag Q to the position of the inlet opening 41H of the storing space S where it is to be stored. Information on completion of this movement will be transmitted to the charging controlling unit 39, so this charging controlling unit 39 will activate the pusher 38 to charge the processing bag Q into the storing space S.

When the processing bag Q has been charged into the storing space S in the manner above, association information which associates the ID information of this recording medium P charged in the processing bag Q and the position information of the storing space S is stored in the delivery controlling unit 48 and at the same time, this association information is transmitted to the main controlling unit 26 to be stored therein. Incidentally, with this storage of the association information, the main controlling unit 26 can grasp the "whereabouts" of the recording medium P to be managed by the ID information and the silver halide photographic printer B can grasp presence/absence of delivery.

Moreover, if it is found, based upon the order data obtained at the receiving device A, the print size is not a size which allows automatic charging from the enveloper D to the delivering device E (including the case of making an electronic photo album in a recording medium P comprised of a CD-R disc), the sliver halide photographic printer B will carry out printing of the image data on the recording media comprised of print papers. Or, the image data will be recorded in the recording medium P comprised of a CD-R disc to make an electronic photo album (steps #102, #104).

Upon completion of the processing at the silver halide photographic printer B described above, an attendant of the DEP shop will carry out a manual operation of putting the recording media P into a storing space S provided in the third delivering device E3 (step #105).

Upon completion of the above storage, the association information that associates the ID information of the recording media P with the position information of the storing space S will be transmitted to the delivering controlling unit 48 to be stored therein and stored also in the main printing controlling unit 26. Incidentally, with the storage of this association information therein, the main controlling unit 26 can specify/identify the delivering device E where the recording medium P managed by the ID information is stored and the silver halide photographic printer B can grasp the presence/absence of delivery.

Next, if a customer places the reception slip R in the vicinity of the barcode reader 54 of the guiding device F to cause this reader 54 to read the ID information or touches his/her finger or the like on the touch panel 52 of the monitor 53 to input ID information comprising the personal ID number or password, the information sharing means 57 of the guiding controlling unit 56 of the guiding device F outputs referencing requesting information to the main controlling unit 26, then, the main controlling unit 26 returns the association information indicative of the recording medium P stored in the storage unit 46 of each delivering device E and the ID information associated therewith.

Then, based upon the referenced association information, the guiding controlling unit 56 determines presence/absence of a delivering device E which stores the particular recording medium P associated with that ID information and if such device is found, the unit outputs information specifying the delivering device E to the monitor 53 and to the speaker 55. Conversely, if it is found that none of the delivering devices E stores the recording medium P associated with the ID information, a message indicative of the recording medium P associated with the ID information being not stored in any one of the delivering devices E is outputted from the monitor 53 and from the speaker 55 and a further message suggesting inquiring a shop attendant is outputted (steps #106, #107).

The subject of the referencing of the association information by the guiding controlling unit 56 need not be the main controlling unit 26, but can be the delivering controlling unit 48 of each delivering device E. Further, the timing of the referencing need not be after input of ID information. Instead, the mode of processing may be modified such that the association information is obtained and stored by making referencing request to the main controlling unit 26 or the delivering controlling unit 48 by a predetermined interval.

Incidentally, with this guiding device F, under its standby condition, a graphical "keyboard" (an image of keyboard not shown) is shown on the monitor 53. Therefore, a customer who has requested processing of image data via the internet N can input the ID information comprising a personal ID number, a password or the like by touching his/her finger on the monitor 53.

Of the contents of the information which specifies the delivering device E, what is outputted on the monitor 53 comprises the position information which shows, by way of a geographical image, the position of the delivering device E storing the recording medium P and a message including the number or numeral provided on the delivering device E. Further, what is outputted from the speaker 55 comprises a message indicating the position of the position of the delivering device E and a message including the number or the numeral provided on the delivering device E, which messages are given in the form of human voice messages.

Next, when the customer is to receive the recording medium P from the delivering device E, the customer causes the barcode reader 44 of the delivering device E to read the ID information of the reception slip R or touches his/her finger on the monitor 43 to input the ID information comprising a personal ID number or a password. In response, the delivering controlling unit 48 executes the delivering operation (steps #108, #109).

In this delivering device E too, under its standby condition, the keyboard (not shown) is displayed on the monitor 43. So, if the customer placed an order for processing of image data via the internet N, the customer can input the ID information comprising a personal ID number or password by touching his/her finger on the monitor 43.

In this delivering operation, if it is determined that the recording medium P associated with the ID information is stored in that delivering device E, the storing space S storing this recording medium S is specified and the feeding plate 47 (an example of "feeding unit") is operated to project thereby to feed the processing bag Q containing this recording medium P from the opening 41G, whereby the customer can now receive the recording medium P.

On the other hand, if it is determined that the recording medium P associated with the ID information is not stored in that delivering device E and that the recording medium P associated with the ID information is stored in a different delivering device E, the guiding information to this different delivering device E is outputted from the monitor 53 and the speaker 55. This outputting is effected in the same manner as the process at step #107 described above.

Further, if it is determined that the recording medium P associated with the ID information is not stored in that delivering device E and that the recording medium P associated with the ID information is not stored in any other delivering device E, either, then, a message to the effect that the recording medium P associated with that ID information is not stored in any of the delivering devices E is outputted from the monitor 53 and from the speaker 55. Also, a further message is outputted which suggests inquiring a shop attendant. This outputting too is effected in the same manner as the process at step #107 described above.

### [Modified Embodiments of First Embodiment]

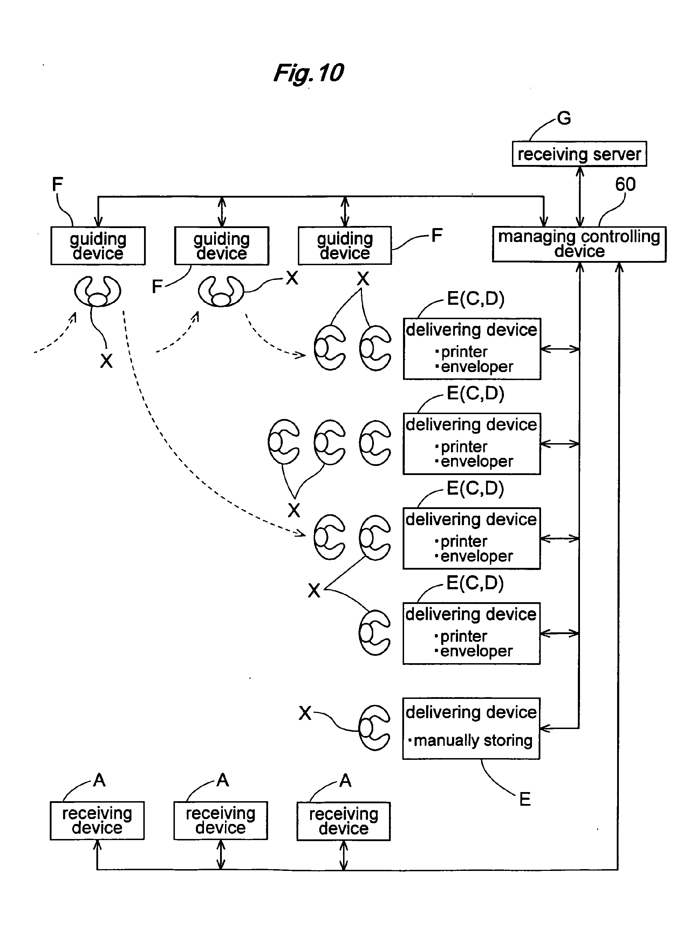

(a) As shown in Fig. 10, according to the present invention, the delivery system can be configured such that the system comprises a plurality of guiding devices F, a plurality of receiving device A, a plurality of delivering devices E and a managing controlling device 60 for making information access with these via a communication cable L (in the discussion of this system, the same components as those in the foregoing embodiment are denoted with the same numerals or marks as used in the foregoing embodiment).
   With this construction, even when a number of customers X are to make a queue to the delivering devices E, before the customer X makes such queue, as the barcode reader 54 of the guiding device F inputs the ID information of the reception slip R or the personal ID number is inputted via the touch panel 52 of the monitor 53, the customer X can obtain information which specifies the delivering device E which stores the particular recording medium P ordered by this customer X. With this, the customer X does not have to make a queue wastefully, and the time taken by the customer X can be saved.
(b) In the foregoing embodiment, the receiving device A and the delivering device E are arranged close to each other. However, in a large-scaled supermarket for example, the receiving device A may be installed on the upstream in the flow direction of customers, whereas the delivering device E may be installed at a position where the customer has just exited the cashier. With this layout, it becomes also possible for the receiving device A to store the recording medium P while the customer is shopping in the store. In this case, disposing the guiding device F at a position near the cash desk will provide additional convenience for the customer.
(c) In the present invention, the delivering device E does not need to include any feeding unit. That is to say, as described also in the Japanese Patent Application "Kokai" No. 2003-157474, the system can be constructed such that when the ID information has been inputted, the recording medium P can be taken out manually from the storing space storing the recording medium corresponding to that ID information.

### [Effect of First Embodiment]

With the above-described constructions, when a customer is to receive the recording medium P, the customer causes the barcode reader 54 of the guiding device F to read the ID information in the receipt slip R or inputs the ID information comprising a personal ID number or a password including character or numerical information via the touch panel 52, information specifying the delivering device E storing the recording medium P to be received by the customer is outputted to the guiding device F. This output includes position information in the form of a geographical image and a message including the number provided to the delivering device and includes also messages in the form of human voice which also specifies the target delivering device E. Therefore, the customer can recognize the position of the delivering device E by means of an image, characters and voices.

Also, this system automatically effects the operations that for a fixed size such as the service size which is frequently printed, image data is printed on the recording medium P with using an inkjet printer C corresponding to the first delivering device E1, the second delivering device E2 of the three delivering devices E and this recording medium P is charged by the enveloper D according to the customer's order unit into the processing bag Q and then charging this processing bag Q to the corresponding delivering device E (the first delivering device E1 or the second delivering device E2). This enables reduction in the number of attendants.

### [Second Embodiment]

Next, a second embodiment of the present invention will be described with reference to the accompanying drawings.

### [General Construction]

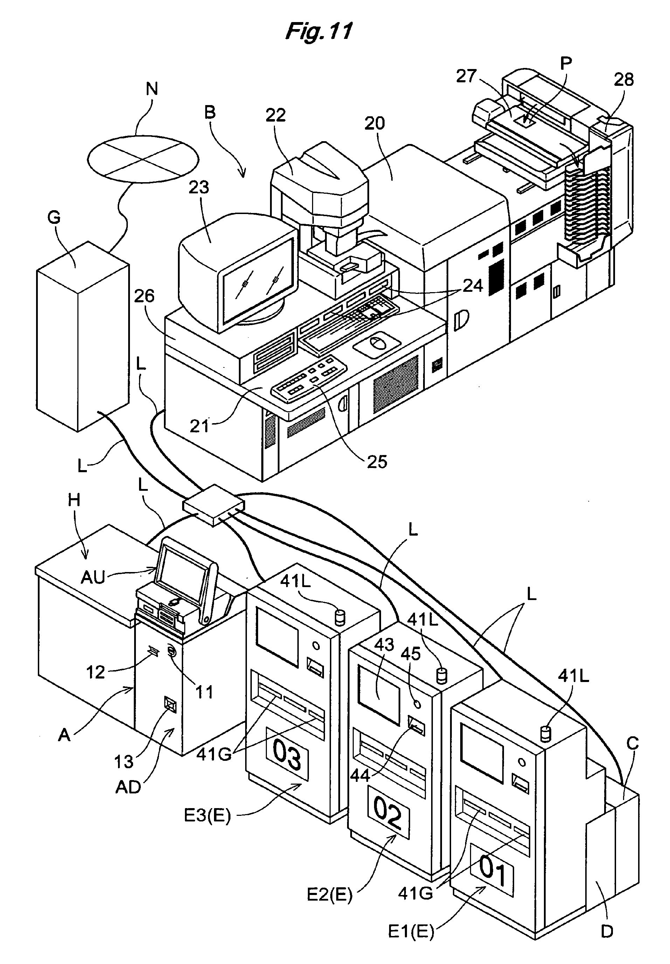

As shown in Fig. 11, a delivery system according to this embodiment comprises a receiving device A, a silver halide photographic printer B for printing image data on a recording medium P which is a silver halide print paper, based on information from the receiving device A, three delivering devices E, and a receiving server G to be connected to the internet N as a communication network.

The general construction of this embodiment differs from that of the first embodiment in that the guiding device F is not provided and an indicator lamp 41L is provided on the top face of the case 41 of the delivering device E to be illuminated in a situation requiring an explanation to the customer. Therefore, the same functional components are denotesd with the same numerals or marks and explanation thereof will be omitted.

### [Controlling Construction of the System]

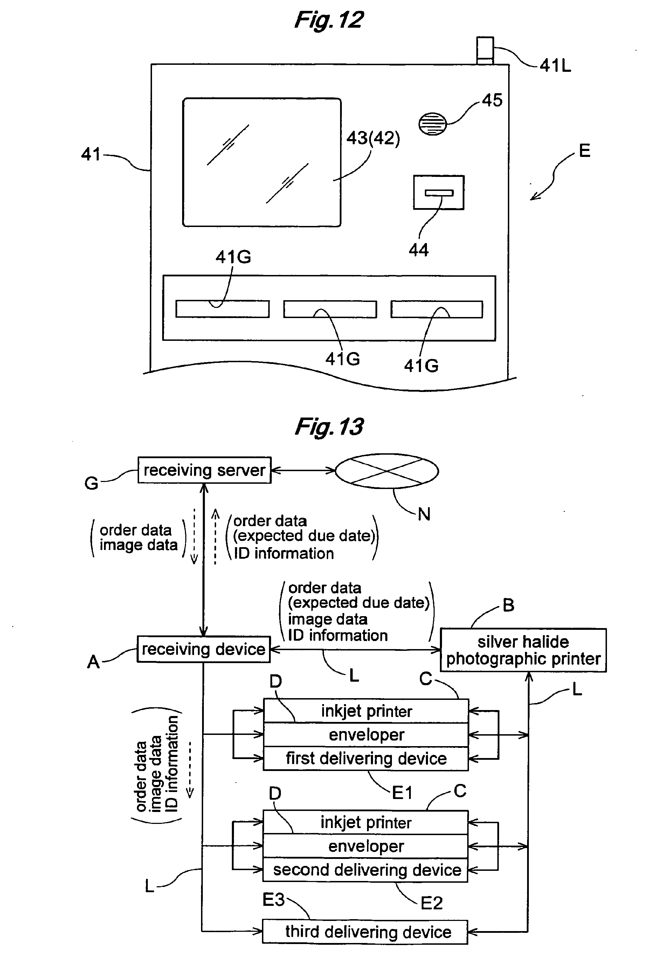

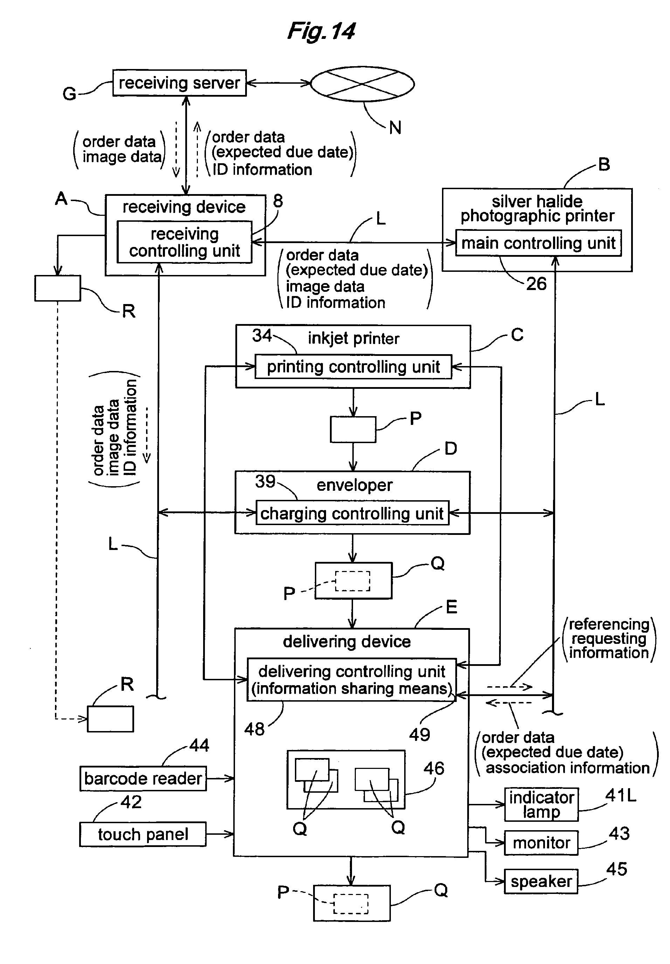

As shown in Fig. 13 and Fig. 14, there is provided a signal line for transmitting information from the receiving controlling unit 8 of the receiving device A to the main controlling unit 26 of the silver halide printer B via the communication cable L. Further, there is also provided a signal line for transmitting information, via the communication cable L, from this receiving controlling unit 8 to the printing controlling unit 34 of the inkjet printer C and the charging controlling unit 39 of the enveloper D and to the delivering controlling unit 48 of the delivering device E. The receiving server G and the receiving controlling unit 9 of the receiving device A are connected to each other via the communication cable L.

The main controlling unit 26 provides the function of managing the entire delivery system of the invention and to this main controlling unit 26, there is provided a signal line for allowing access of information from the printing controlling unit 34, the charging controlling unit 39 and the delivering controlling unit 46.

The receiving controlling unit 8, the main controlling unit 26, the printing controlling unit 34, the charging controlling unit 39 and the delivering controlling unit 48 respectively include a microprocessor and software for realizing the process corresponding thereto.

### [Procedure of Delivering Operation]

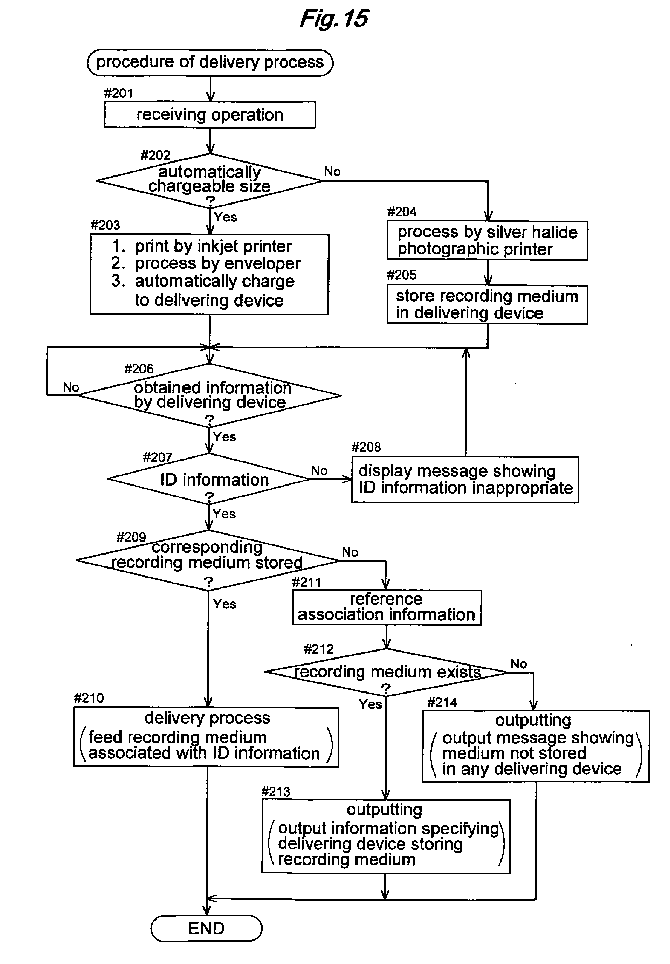

Fig. 15 shows a flowchart which illustrates the general flow of the procedure comprising making of recording medium P and delivery of this recording medium P to a customer, with use of the system construction shown in Fig. 13 and Fig. 14. Incidentally, the procedure up to the charging of the recording medium P to the delivering device E (steps #201 through #205) is same as the process from steps #101 through #105 in the first embodiment and therefore explanation thereof will be omitted.

When the customer is to receive the recording medium P from the delivering device E, the customer causes the barcode reader 44 of the delivering device E to read the ID information in the receipt slip R or inputs the ID information comprising a personal ID number or password by touching his/her finger or the like on the monitor 43. However, a customer might erroneously input ID information of a card or the like different from the one used in this system. Such erroneous operation is found by the delivering controlling unit 48, which then outputs a message indicating the ID information being inappropriate (steps #206 through #208).

In this system, the ID information printed on the receipt slip R issued by the receiving device A is comprised of a barcode according to a predetermined format. Therefore, if the format of the barcode is found different, the card is determined erroneous. Further, in the case also of the ID information comprising a personal ID number or a password, if the digit number is found different, then, the information is determined inappropriate.

The error message above can be e.g. "This receipt slip is not used by the system" which is displayed on the monitor 43 or outputted in the form of a human voice from the speaker 45.

In this delivering device E, under its standby condition, the keyboard image (not shown) is displayed on the monitor 43. Therefore, a customer who placed an order for image data processing via the internet N, can input the ID information comprising a personal ID number or a password by touching his/her finger on the monitor 43.

Further, if the inputted ID information is determined appropriate and it is also determined that the recording medium P associated with this ID information is stored in that delivering device E, then, the storing space S storing this recording medium P is specified and the feeding plate 47 (an example of "feeding unit") is operated to be projected, thereby to feed the processing bag Q containing the recording medium P through the opening 41G, so that the customer can receive it (steps #209, #210).

Conversely, even though the inputted ID information is determined appropriate, but it is also found that the recording medium P associated with this ID information is not stored in that delivering device E, then, the information sharing means 49 of the delivering controlling unit 48 of that delivering device E outputs referencing requesting information to the main controlling unit 26. Then, this main controlling unit 26 returns association information indicative of the recording media P stored in the storage unit 46 of the respective delivering device E and the ID information associated therewith and information of expected due date (steps #209, #211).

The subject of the referencing of the association information by the information sharing means 49 need not be the main controlling unit 26, but can be the delivering controlling unit 48 of each delivering device E. Further, the timing of the referencing need not be after input of ID information. Instead, the mode of processing may be modified such that the association information is obtained and stored by making referencing request to the main controlling unit 26 or the delivering controlling unit 48 by a predetermined interval.

After obtaining the association information as above, based upon this referenced association information, the delivering controlling unit 48 determines presence/absence of a delivering device E which stores the recording medium P associated with this ID information. If it is found such device exists, then, information specifying such delivering device E will be outputted from the monitor 53 and the speaker 55 (steps #212, #213).

Of the contents of the information which specifies the delivering device E, what is outputted on the monitor 53 comprises the position information which shows, by way of a geographical image, the position of the delivering device E storing the recording medium P and a message including the number or numeral provided on the delivering device E. Further, what is outputted from the speaker 55 comprises a message indicating the position of the position of the delivering device E and a message including the number or the numeral provided on the delivering device E, which messages are given in the form of human voice messages.

Conversely, if it is found that none of the delivering devices E stores the recording medium P associated with the ID information, a message indicative of the recording medium P associated with the ID information being not stored in any one of the delivering devices E is outputted from the monitor 53 and from the speaker 55 and a further message suggesting inquiring a shop attendant is outputted and the indicator lamp 41L is illuminated (steps #212, #214).

In the case of outputting the message as above, if the situation is that the customer inputted the ID information erroneously before the expected due date of delivery for instance, the cause for the error is apparent. Therefore, the required process is simply outputting a message to that effect, and there is no need to illuminating the indicator lamp 41L. However, if the situation is that the ID information is appropriate, but still the requested medium is not stored in any one of the delivering device E, the possible cause for this should require cause analysis by the system attendant or manager since the cause may be loss of data, problem developed in the inkjet printer C, the enveloper D, etc. Therefore, in this case, the indicator lamp 41L is illuminated for alarming the attendant (or manger) of occurrence of abnormality.

### [Modified Embodiments of Second Embodiment]

(a) In the present invention, the delivering device E may omit the feeding unit. That is to say, as described also in the Japanese Patent Application "Kokai" No. 2003-157474, the system may be simplified such that when ID information is inputted, the recording medium associated with this ID information can be taken out manually from the storing space storing this recording medium.
(b) The mode of process may be modified such that information of occurrence of abnormality is provided to the system attendant via the communication cable L, simultaneously with the illumination of the indicator lamp 41L. In the case of this modified construction, it becomes also possible to provide the system attendant with information of details of the abnormality, thus enabling speedy measure to be taken for that abnormality.

### [Effect of Second Embodiment]

With the above-described construction, when a customer is to receive the recording medium P, the customer causes the barcode reader 44 of the delivering device E to read the ID information in the receipt slip R or inputs the ID information comprising a personal ID number or a password including character or numerical information via the touch panel 42. Then, if the recording medium P is stored in this delivering device E, the customer can receive the medium speedily.

Further, even if the recording medium P is not stored in that delivering device E, if it is found that the recording medium P is stored in a different delivering device E, then, information specifying the delivering device E storing the recording medium P to be received by the customer is outputted from the monitor 43 and from the speaker 45. As this output comprises the information including a geographical image and a number provided to the delivering device E and information specifying the delivering device E in the form of a human voice message, the customer can recognize the target delivering device E by means of the image, character and the sound.

In particular, when the customer inputs ID information by causing the barcode reader 44 of the delivering device E to read the ID information in the receipt slip R or inputs ID information comprised of a personal ID number or a password including character and/or numerical information, if it is found that the corresponding recording medium P does not exist, a message to that effect is displayed on the monitor 43 and information in the form of human voice message is outputted from the speaker 45 and moreover, the indicator lamp 41L is illuminated.

With the above, the customer can recognize the situation of the recording medium P from the outputted information and also the system attendant can cope with the situation. Hence, even when a problem has occurred, this problem can be coped with speedily.

Also, this system automatically effects the operations that for a fixed size such as the service size which is frequently printed, image data is printed on the recording medium P with using an inkjet printer C corresponding to the first delivering device E1, the second delivering device E2 of the three delivering devices E and this recording medium P is charged by the enveloper D according to the customer's order unit into the processing bag Q and then charging this processing bag Q to the corresponding delivering device E (the first delivering device E1 or the second delivering device E2). This enables reduction in the number of attendants.

## Claims

1. A delivery system with:
a plurality of delivering devices (E), each of which includes a storage unit (46) having a plurality of storage spaces (S) for storing therein recording media (P) according to the unit of customer's order and a delivering controlling unit (48) operable to obtain ID information associated with the recording medium (P), thereby realizing delivery of the recording medium (P) associated with the ID information;
a guiding device (F) including an ID information obtaining section (52, 54) for obtaining the ID information from a customer, an information outputting section (53, 55) for outputting information and a guiding controlling unit (56) for controlling said information obtaining section (52, 54) and said information outputting section (63, 55);
**characterized in that**
said guiding controlling unit (56) includes information sharing means (57) for referring to the recording media (P) stored in the plurality of storage units (46) of the plurality of delivering device (E) and to ID information associated with the recording media (P) via a communicating means (L); and
when said ID information obtaining section (52, 54) has obtained the ID information, said guiding controlling unit (56) outputs, to said information outputting section (53, 55), specifying information for specifying one of the delivering devices (E) which stores the recording medium (P) associated with said ID information, based upon information from said information sharing means (57).

2. A delivery system with:
a plurality of delivering devices (E) each of which includes a storage unit (46) having a plurality of storing spaces (S) for storing recording media (P) according to customer's order unit, and a delivering controlling unit (48) for obtaining ID information associated with the recording medium (P), thus realizing delivery of the recording medium (P) associated with the ID information,
**characterized in that**
each of said delivering devices (E) includes an ID information obtaining section (52, 54) for obtaining the ID information from a customer, and an information outputting section (53, 55) for outputting information;
said delivering controlling unit (48) includes information sharing means (49) for referring to the recording media (P) stored in the plurality of storage units (46) of the plurality of delivering device (E) and to ID information associated with the recording media (P); and
when said ID information obtaining section (52, 54) of one of the delivering devices (E) has obtained the ID information, said delivering controlling unit (48) allows delivery of the recording medium (P) if the recording medium (P) associated with the ID information is stored in the storage unit (46) of said one delivering device (E), whereas said delivering controlling unit (48) determines presence/absence of a delivering device (E) that stores the recording medium (P) associated with the ID information if the recording medium (P) associated with the ID information is not stored in the storage unit (46) of said one delivering device (E) and then outputs , based upon information from said information sharing means (49),. result of this determination to the information outputting section (53, 55) of said delivering device (E).

3. The delivery system according to claim 2, **characterized in that** when said delivering controlling unit (48) determines that the recording medium (P) associated with the ID information inputted by said ID information obtaining means (52, 54) is stored in a storage unit (46) of a further delivering device (E) than said one delivering device (E), said delivering controlling unit (48) outputs, to said information outputting section (53, 55), specifying information specifying said further delivering device (E) storing the recording medium (P).

4. The delivery system according to any one of claims 1-3, **characterized in that** said delivering device (E) includes a case (41) having the storage unit (46) therein and a feeding unit (47) for feeding the recording medium (P) stored in the storage unit (46) to the outside of the case (41), and said delivering controlling unit (48) determines the storing space (S) where the recording medium (P) associated with the ID information is stored and controls said feeding unit (47) to feed the recording medium (P) from the storing space (S).

5. The delivery system according to any one of claims1-4, **characterized by** a receiving device (A) for receiving, from a customer, an order for image processing on the recording medium (P), and a receiving controlling unit (8) for producing a reception slip (R) recording the ID information in correspondence with the order, when the receiving device (A) receives the order for image processing on the recording medium (P).

6. The delivery system according to any one of claims 1-4, **characterized by** a receiving server (G) for receiving a request for image data processing on the recording medium (P) via a communication network (N), wherein when the receiving server (G) has received a request or order for image data processing, there is produced the ID information containing character information or numerical information in correspondence with the order and this information is transmitted to the customer via the communication network (N).

7. The delivery system according to any one of claims 1-6, **characterized by** a printing unit (C) for printing image information on the recording medium (P) and an automatic charging unit (D) for charging the recording medium (P) printed at the printing unit (C) to the storage unit (46).
